(19) **Europäisches Patentamt / European Patent Office / Office européen des brevets**

(11) **EP 4 599 958 A1**

(12) **EUROPEAN PATENT APPLICATION**
published in accordance with Art. 153(4) EPC

(43) Date of publication:
**13.08.2025 Bulletin 2025/33**

(21) Application number: **22961498.7**

(22) Date of filing: **25.11.2022**

(51) International Patent Classification (IPC):
**B21F 35/00** (2006.01)   **C21D 9/02** (2006.01)
**C21D 1/09** (2006.01)   **C21D 1/40** (2006.01)
**F16F 1/02** (2006.01)

(52) Cooperative Patent Classification (CPC):
**B21F 35/00; C21D 1/09; C21D 1/40; C21D 9/02;
F16F 1/02**

(86) International application number:
**PCT/JP2022/043557**

(87) International publication number:
**WO 2024/075314 (11.04.2024 Gazette 2024/15)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **05.10.2022 JP 2022161106**
**05.10.2022 JP 2022161107**
**05.10.2022 JP 2022161108**

(71) Applicant: **NHK Spring Co., Ltd.
Yokohama-shi, Kanagawa 236-0004 (JP)**

(72) Inventors:
• **TAKEDA, Kazuya**
**Yokohama-shi, Kanagawa 236-0004 (JP)**
• **NAGAYASU, Go**
**Yokohama-shi, Kanagawa 236-0004 (JP)**
• **TSUKADA, Kouta**
**Yokohama-shi, Kanagawa 236-0004 (JP)**

(74) Representative: **Hoffmann Eitle
Patent- und Rechtsanwälte PartmbB
Arabellastraße 30
81925 München (DE)**

(54) **COIL SPRING MANUFACTURING METHOD**

(57)     A coil spring manufacturing method, the coil spring being formed by processing a base material made of a wire material, the method includes a cold forming step of performing cold forming on the base material to fabricate a shaped material of spiral shape, a quenching step of performing quenching on the shaped material, and an electrical tempering step of performing tempering on the shaped material obtained after quenching, by using electrical heating.

FIG.2

## Description

Field

The present invention relates to a coil spring manufacturing method.

Background

In conventional steps of fabricating coil springs, hot forming and cold forming is employed. The hot forming, among hot forming and cold forming enables forming a thick wire material, but has a smaller degree of freedom in shape to be formed. Meanwhile, the cold forming has a larger degree of freedom in the shape to be formed, but makes it difficult to form the thick wire material. As a technology enabling forming the thick wire material having a high degree of freedom in shape, a technology is known to perform quenching and tempering after cold forming of the wire material (See, e.g., Patent Literature 1).

Citation List

Patent Literature

Patent Literature 1: JP S63-059775 B

Summary

Technical Problem

However, in Patent Literature 1, tempering performed in an electric furnace or a gas furnace has provided poor thermal efficiency and non-uniform temperature in the furnace, leading to variation in the quality of fabricated coil springs, in some cases.

The present invention has been made in view of the above, and an object thereof is to provide a coil spring manufacturing method enabling suppressing variation in quality.

Solution to Problem

To solve the above-described problem and achieve the object, a method of manufacturing a coil spring formed by processing a base material made of a wire material according to the present invention includes: a cold forming step of performing cold forming on the base material to fabricate a shaped material of spiral shape; a quenching step of performing quenching on the shaped material; and an electrical tempering step of performing tempering on the shaped material obtained after quenching, by using electrical heating.

Moreover, the above-described method of manufacturing a coil spring according to the present invention further includes a drawn wire material forming step of performing wire drawing on the base material to form a drawn wire material, and wherein the cold forming step includes performing cold forming on the drawn wire material.

Moreover, in the above-described method of manufacturing a coil spring according to the present invention, in the quenching step, the shaped material is immersed in a heated water-soluble quenching agent to perform quenching.

Moreover, the above-described method of manufacturing a coil spring according to the present invention further includes an electrical heating step of performing electrical heating on the drawn wire material, before the quenching step.

Moreover, in the above-described method of manufacturing a coil spring according to the present invention, in the electrical tempering step, the shaped material having both ends gripped by a first energizing member to grip one end of the shaped material obtained after the quenching and by a second energizing member to grip the other end of the shaped material obtained after the quenching is energized, and the first and second energizing members grip the shaped material by a first gripping member and a second gripping member, the first gripping member being positioned on an outer peripheral side of the shaped material, the second gripping member being positioned on an inner peripheral side of the shaped material to hold the shaped material with the first gripping member, the second gripping member having a surface making contact with the shaped material having a radius of curvature that is smaller than a radius of curvature of the inner periphery of the shaped material, holding the shaped material with the first gripping member.

Moreover, in the above-described method of manufacturing a coil spring according to the present invention, the first gripping member includes a flat portion provided on a surface making contact with the shaped material and has a flat shape, and in the electrical tempering step, the flat portion of the first gripping member and an outer peripheral curved surface of the second gripping member grip the shaped material to electrically heat the shaped material.

Moreover, in the above-described method of manufacturing a coil spring according to the present invention, the first gripping member is provided in a surface making contact with the shaped material, and has a curved surface curved in a concave shape, and having a radius of curvature larger than a diameter of the wire material of the shaped material, and in the electrical tempering step, the curved surface of the first gripping member and an outer peripheral curved surface of the second gripping member grip the shaped material to electrically heat the shaped material.

Moreover, in the above-described method of manufacturing a coil spring according to the present invention, the first gripping member includes a groove portion that is provided in a surface making contact with the shaped material and has a V-shaped groove, and in the electrical tempering step, the groove portion of the first gripping member and an outer peripheral curved surface of the second gripping member grip the shaped material to electrically heat the shaped material.

Moreover, in the above-described method of manufacturing a coil spring according to the present invention, in the electrical tempering step, a rate of temperature rise is changed stepwise to heat the shaped material.

Moreover, the above-described method of manufacturing a coil spring according to the present invention further includes an electrical heating step of performing electrical heating on the shaped material obtained after the cold forming, before the quenching step.

Moreover, in the above-described method of manufacturing a coil spring according to the present invention, in the electrical tempering step, a first energization period extending for a predetermined time from start of heating of the shaped material and a second energization period extending after a lapse of the predetermined time to end of heating are set, and a rate of temperature rise in the shaped material in the second energization period is lower than a rate of temperature rise in the shaped material in the first energization period.

Moreover, in the above-described method of manufacturing a coil spring according to the present invention, in the electrical tempering step, a current value during the second energization period is reduced relative to a current value during the first energization period.

Moreover, the above-described method of manufacturing a coil spring according to the present invention further includes an electrical heating step of performing electrical heating on the shaped material obtained after the cold forming, before the quenching step. Advantageous Effects of Invention

According to the present invention, it is possible to suppress variation in quality.

Brief Description of Drawings

[FIG. 1] FIG. 1 is a diagram illustrating a configuration of a coil spring fabricated by a manufacturing method according to a first embodiment of the present invention.
[FIG. 2] FIG. 2 is a diagram illustrating a coil spring manufacturing method according to the first embodiment of the present invention.
[FIG. 3] FIG. 3 is a diagram illustrating a coil spring manufacturing method according to a second embodiment of the present invention.
[FIG. 4] FIG. 4 is a diagram illustrating electrical heating.
[FIG. 5] FIG. 5 is a diagram as viewed in a direction indicated by an arrow A illustrated in FIG. 4.
[FIG. 6] FIG. 6 is a graph illustrating a relationship between temperature and time in a shaped material during electrical heating in the second embodiment of the present invention.
[FIG. 7] FIG. 7 is a diagram illustrating electrical heating according to a first modification of the second embodiment of the present invention.
[FIG. 8] FIG. 8 is a diagram illustrating electrical heating according to a second modification of the second embodiment of the present invention.
[FIG. 9] FIG. 9 is a graph illustrating temporal changes of a current value and the temperature of a shaped material during electrical heating, in a third embodiment of the present invention.

Description of Embodiments

Hereinafter, modes for carrying out the present invention (hereinafter, referred to as "embodiments") will be described with reference to the accompanying drawings. Note that the drawings are schematic and a relation between the thickness and the width of each portion, a ratio of the thicknesses of the respective portions, and the like may be different from realistic ones, and the drawings may depict some portions as having different relations and ratios of dimensions.

(First Embodiment)

A diagram of a configuration of a coil spring fabricated by a manufacturing method according to a first embodiment of the present invention is shown. A coil spring 1 is fabricated by helically winding a wire material. The coil spring 1 is fabricated using a wire material made of, for example, a metal or an alloy.

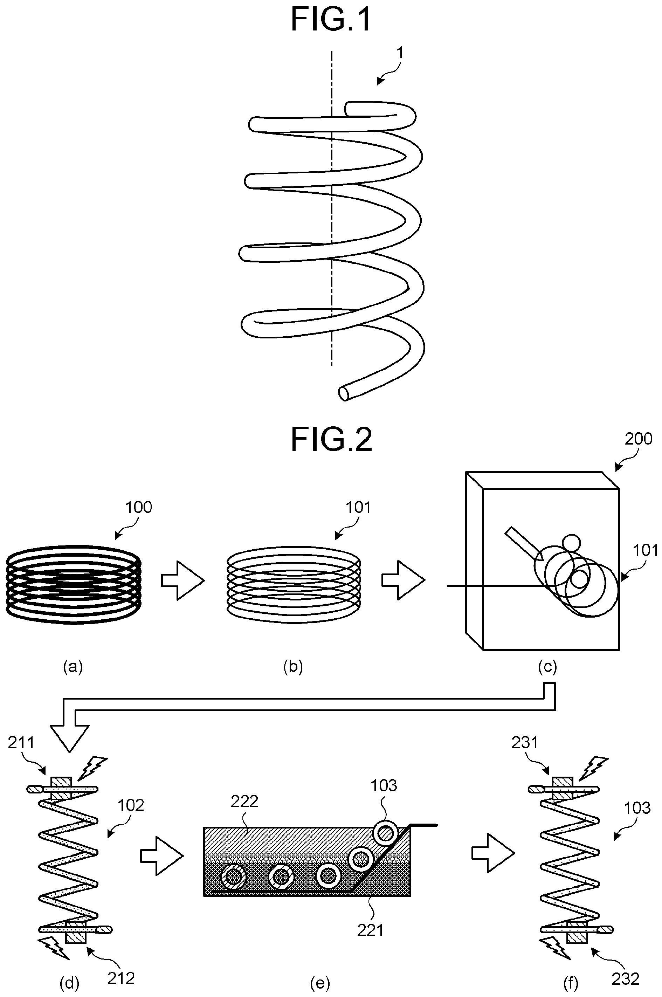

Next, a manufacturing method for the coil spring 1 will be described with reference to FIG. 2. FIG. 2 is a diagram illustrating a coil spring manufacturing method according to the first embodiment of the present invention. The coil spring 1 is fabricated by processing a base material.

First, a base material 100 (see (a) of FIG. 2) made of the wire material is subjected to wire drawing to obtain a drawn wire material 101 (see (b) of FIG. 2). At this time, the base material 100 (the drawn wire material 101) is not subjected to heat treatment, and a wire-drawing machine is used to reduce the diameter of the wire material by, for example, through a die, thereby obtaining a wire material (drawn wire material 101) having a designed diameter.

Thereafter, the drawn wire material 101 is shaped by cold forming (see (c) of FIG. 2). Specifically, a coiling machine 200 is used to wind the drawn wire material 101. The coiling machine 200 includes, for example, winding pins and a cutting tool, shapes the drawn wire material 101 by bringing the drawn wire material 101 into contact with the winding pins, and cuts the drawn wire material 101 at a predetermined length by the cutting tool.

A shaped material 102 obtained by winding and cutting the drawn wire material 101 is subjected to electrical heating (see (d) of FIG. 2). In the electrical heating, a first energizing member 211 is attached to one end of the shaped material 102, a second energizing member 212 is attached to the other end, for application of a current between the first energizing member 211 and the second energizing member 212, and the shaped material 102 is energized. This energization generates heat, and the shaped material 102 is heated.

After the electrical heating of the shaped material 102, the shaped material 102 is subjected to quenching (see (e) of FIG. 2). The shaped material 102 is immersed in a tank 221 containing a water-soluble quenching agent 222. At this time, the temperature and concentration of the water-soluble quenching agent are managed so as to obtain appropriate heat treatment quality. Immersing the shaped material 102 in the water-soluble quenching agent 222 provides a shaped material 103 that is subjected to quenching. Note that oil may be used instead of the water-soluble quenching agent 222.

After quenching, the shaped material 103 is subjected to electrical heating (electrical tempering) for tempering (see (f) of FIG. 2). In the electrical tempering, a first energizing member 231 is attached to one end of the shaped material 103, a second energizing member 232 is attached to the other end, for application of a current between the first energizing member 231 and the second energizing member 232, and the shaped material 103 is energized. This energization generates heat, and the shaped material 103 is heated. In the electrical tempering, an energization condition for reheating the shaped material 103 to have a predetermined hardness is set.

The base material 100 is processed in the above process, and the coil spring 1 illustrated in FIG. 1 is fabricated.

Here, annealing treatment may be performed before and after the wire drawing. Furthermore, when the base material has a designed wire diameter, cold forming is allowed to be performed on the base material 100 without performing the wire drawing.

In the first embodiment of the present invention described above, tempering treatment for adjusting hardness or the like by electrical heating uniformly heats the entire shaped material 103, and thus uniformly adjusting the hardness of the entire shaped material 103. In addition, electrical tempering enables suppression of variation in shape between the shaped materials 103, improving shape-forming accuracy. According to the present first embodiment, it is possible to suppress variation in quality by performing the tempering treatment through electrical heating. In addition, the yield can be improved in manufacturing the coil spring 1.

In addition, according to the present first embodiment, electrical tempering enables to reduce a time required for tempering and reduce an amount of carbon dioxide emissions, as compared with tempering using a furnace.

(Second Embodiment)

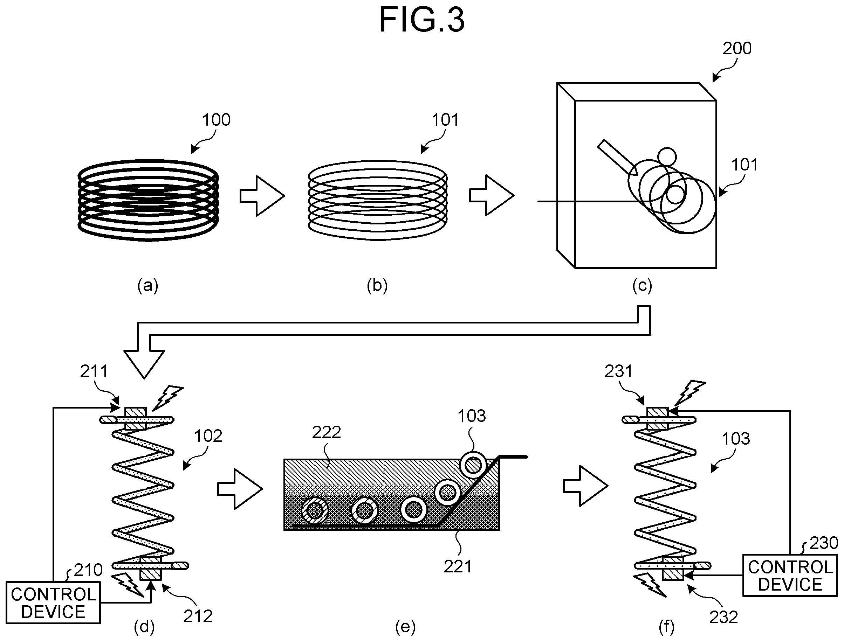

Next, a second embodiment of the present invention will be described with reference to FIGS. 3 to 6. Note that a coil spring manufactured in the present second embodiment is the coil spring 1 illustrated in FIG. 1. Hereinafter, a coil spring manufacturing method according to the present second embodiment will be described. FIG. 3 is a diagram illustrating the coil spring manufacturing method according to the second embodiment of the present invention.

In the present second embodiment, as in the first embodiment, the base material 100 (see (a) of FIG. 3) made of the wire material is subjected to wire drawing to obtain the drawn wire material 101 (see (b) of FIG. 3). Thereafter, the drawn wire material 101 is shaped by cold forming (see (c) of FIG. 3).

The shaped material 102 obtained by winding and cutting the drawn wire material 101 is subjected to electrical heating (see (d) of FIG. 3). In the electrical heating, a first energizing member 211 is attached to one end of the shaped material 102, a second energizing member 212 is attached to the other end, for application of a current between the first energizing member 211 and the second energizing member 212, and the shaped material 102 is energized. This energization generates heat, and the shaped material 102 is heated.

In the present second embodiment, movement (gripping of the shaped material 102) and energization of the first energizing member 211 and the second energizing member 212 are controlled, under the control of a control device 210.

After the electrical heating of the shaped material 102, the shaped material 102 is subjected to quenching (see (e) of FIG. 3). The shaped material 102 is immersed in a tank 221 containing a water-soluble quenching agent 222.

After quenching, the shaped material 103 is subjected to electrical heating (electrical tempering) for tempering (see (f) of FIG. 3).

In the present second embodiment, movement (gripping of the shaped material 103) and energization of the first energizing member 231 and the second energizing member 232 are controlled, under the control of a control device 230.

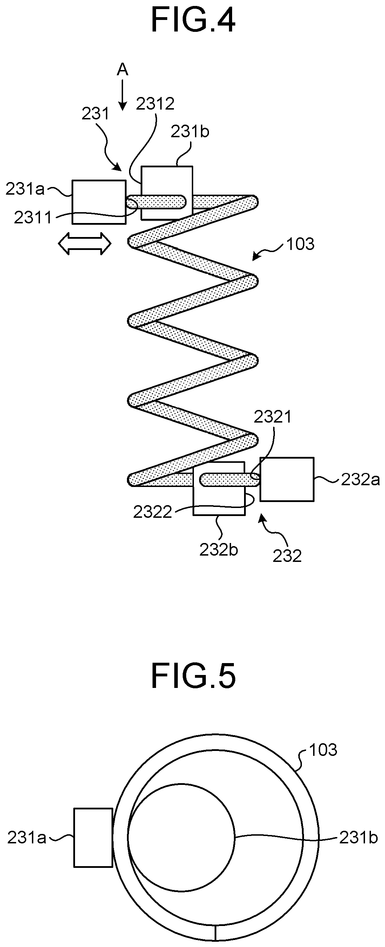

Here, the electrical heating performed during electrical tempering (see (f) of FIG. 3) will be described with reference to FIGS. 4 to 6. Note that also when the shaped material 102 before quenching is subjected to electrical heating (see (d) of FIG. 3), heating is allowed to be performed using a similar configuration.

FIG. 4 is a diagram illustrating electrical heating. FIG. 5 is a diagram as viewed in a direction indicated by an arrow A illustrated in FIG. 4. The first energizing member 231 includes a first gripping member 231a and a second gripping member 231b, and is positioned on one end side of the shaped material 103.

The first gripping member 231a has a prismatic shape and is positioned on an outer peripheral side of the shaped material 103. The first gripping member 231a includes a flat portion 2311 whose surface on a side in contact with the shaped material 103 has a flat shape. Note that as long as the surface of the first gripping member 231a making contact with the shaped material 103 has a flat surface, the other portions may have a columnar shape or another polygonal shape.

The second gripping member 231b has a columnar shape and is positioned on an inner peripheral side of the shaped material 103. A side surface (outer peripheral surface) 2312 of the second gripping member 231b has a radius of curvature that is smaller than a radius of curvature of the inner periphery of the shaped material 103. Here, the radius of curvature of the inner periphery of the shaped material 103 corresponds to a radius of curvature of the inner periphery of the shaped material 103 in a plan view (see FIG. 5) as viewed in an axial direction (axial direction of winding) of the shaped material 103. The radius of curvature of the side surface of the second gripping member 231b smaller than the radius of curvature of the inner periphery of the shaped material 103 applicable can be applied to various types of shaped materials 103.

The first gripping member 231a is movable in a direction towards or away from the second gripping member 231b, under the control of the control device 230. The second gripping member 231b is movable in a direction towards or away from the first gripping member 231a under the control of the control device 230. Note that the second gripping member may be configured to be movable toward the first gripping member according to the diameter of a winding of the shaped material 103, or the first energizing member 231 and the second energizing member 232 may be configured to be movable in a direction toward or away from each other according to the winding number or the like of the shaped material 103.

The second energizing member 232 includes a first gripping member 232a and a second gripping member 232b, and is positioned on the other end side of the shaped material 103.

The first gripping member 232a has a prismatic shape and is positioned on an outer peripheral side of the shaped material 103. The first gripping member 232a includes a flat portion 2321 whose surface on a side in contact with the shaped material 103 has a flat shape.

The second gripping member 232b has a columnar shape and is positioned on an inner peripheral side of the shaped material 103. A side surface (outer peripheral surface) 2322 of the second gripping member 232b has a radius of curvature that is smaller than a radius of curvature of the inner periphery of the shaped material 103.

The first energizing member 231 and the second energizing member 232 are controlled in energization via a power supply line which is not illustrated, under the control of the control device 230. The first gripping member 232a and the second gripping member 232b are movable under the control of the control device 230.

For example, the control device 230 is arranged at a predetermined position, on the shaped material 103, to move the gripping members of the first energizing member 231 and the second energizing member 232 so that one end portion and the other end portion of the shaped material 103 are gripped. Thereafter, the control device 230 applies a current to the first energizing member 231 or the second energizing member 232 via the power supply line. A current flows between the first energizing member 231 and the second energizing member 232 and the shaped material 103 through contact portions. The shaped material 103 is heated by heat generated at this time.

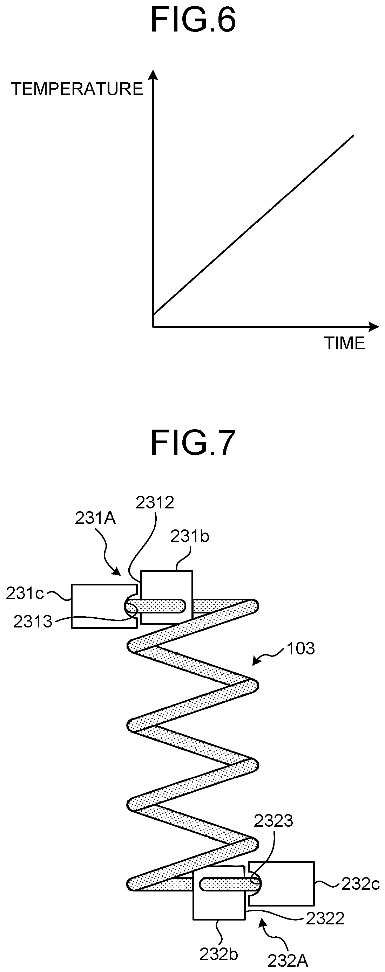

FIG. 6 is a diagram illustrating a relationship between temperature and time in the shaped material 103 during electrical heating. For example, as illustrated in FIG. 6, the control device 230 raises the temperature at a constant rate. At this time, the control device 230 performs energization with a current value at which the temperature rises at the constant rate to raise the temperature of the shaped material 103. Heating at the constant rate enables heating of the shaped material 103 in a short time.

The base material 100 is processed in the above process, and the coil spring 1 illustrated in FIG. 1 is fabricated.

Here, annealing treatment may be performed before and after the wire drawing. Furthermore, when the base material has a designed wire diameter, cold forming is allowed to be performed on the base material 100 without performing the wire drawing.

In the second embodiment of the present invention described above, tempering treatment that adjusts the hardness or the like is performed by electrical heating, as in the first embodiment, and therefore, the tempering treatment by the electrical heating enables suppression of variation in quality. In addition, the yield can be improved in manufacturing the coil spring 1.

Here, in JP 5574772 B2, a contact surface conforming to the surface texture of a workpiece is formed in an electrode portion, and it is necessary to fabricate electrode portions for the shapes (linear shapes or coil diameters) of the workpieces. Therefore, for fabricating coil springs having various shapes, there have been problems that the number of types of electrode portions to be prepared increases, the number of tools and jigs increases, setup frequency related to manufacturing increases, and productivity decreases when the coil springs having a plurality of types of shapes are produced. In contrast, in the present second embodiment, one of the gripping members (here, the outer peripheral side) gripping the shaped material 103 is formed into a flat surface, the other (here, the inner peripheral side) is formed into a curved surface, and the curved surface of the other has a radius of curvature that is smaller than the radius of curvature of the inner periphery of the shaped material 103, and it is possible to reliably grip the shaped material 103 (coil spring 1) for energization, regardless of the shape of the shaped material 103. According to the present second embodiment, it is possible to suppress a decrease in productivity to fabricate coil springs having a plurality of types of shapes.

In addition, according to the present second embodiment, electrical tempering enables to reduce a time required for tempering and reduce the amount of carbon dioxide emissions, as compared with tempering using a furnace.

(First Modification of Second Embodiment)

Next, a first modification of the second embodiment will be described with reference to FIG. 7. FIG. 7 is a diagram illustrating electrical heating according to the first modification of the second embodiment. In the first modification, configurations of energizing members that perform electrical heating are different from those of the energizing members according to the embodiment. In the first modification, a configuration other than the configurations of the energizing members is similar to that of the embodiment, and the description thereof will not be repeated. Note that in FIG. 7, the same components as those in the embodiment are denoted by the same reference numerals.

As in the embodiment, movement (gripping of the shaped material 103) and energization of a first energizing member 231A and a second energizing member 232A according to the first modification are controlled, under the control of the control device 230.

The first energizing member 231A includes a first gripping member 231c and the second gripping member 231b, and is positioned on one end side of the shaped material 103.

The first gripping member 231c has a prismatic shape and is positioned on an outer peripheral side of the shaped material 103. The first gripping member 231c has a curved surface 2313 in which part of a surface on a side making contact with the shaped material 103 is curved in a concave shape. A wall surface forming the curved surface 2313 preferably has a radius of curvature that is larger than a diameter of the wire material of the shaped material 103. Note that as long as the surface of the first gripping member 231c making contact with the shaped material 103 has the curved surface, the other portions may have a columnar shape or another polygonal shape.

In addition, the first gripping member 231c is movable in a direction towards or away from the second gripping member 231b, under the control of the control device 230.

The second energizing member 232A includes a first gripping member 232c and the second gripping member 232b, and is positioned on one end side of the shaped material 103.

The first gripping member 232c has a prismatic shape and is positioned on an outer peripheral side of the shaped material 103. The first gripping member 232c has a curved surface 2323 in which part of a surface on a side making contact with the shaped material 103 is curved in a concave shape. A wall surface forming the curved surface 2323 preferably has a radius of curvature that is larger than the diameter of the wire material of the shaped material 103.

In addition, the first gripping member 232c is movable in a direction towards or away from the second gripping member 232b, under the control of the control device 230.

The first energizing member 231A and the second energizing member 232A are controlled in energization via a power supply line which is not illustrated, under the control of the control device 230.

For example, the control device 230 is arranged at a predetermined position, on the shaped material 103, to move the gripping members of the first energizing member 231A and the second energizing member 232A so that one end portion and the other end portion of the shaped material 103 are gripped. Thereafter, the control device 230 applies a current to the first energizing member 231A and the second energizing member 232A via the power supply line. A current flows between the first energizing member 231A and the second energizing member 232A and the shaped material 103 through contact portions. The shaped material 103 is heated by heat generated at this time.

In the present first modification described above, as in the second embodiment, it is possible to reliably grip the shaped material 103 (coil spring 1) for electrical heating thereof, regardless of the shape. According to the present first modification, it is possible to suppress a decrease in productivity to fabricate coil springs having a plurality of types of shapes.

Furthermore, according to the present first modification, in the first gripping members 231c and 232c, the curved surfaces 2313 and 2323 having concave shapes are formed in the surfaces making contact with the shaped material 103, and grip the shaped material 103 on the curved surfaces, and therefore, the shaped material 103 can be gripped more reliably.

(Second Modification of Second Embodiment)

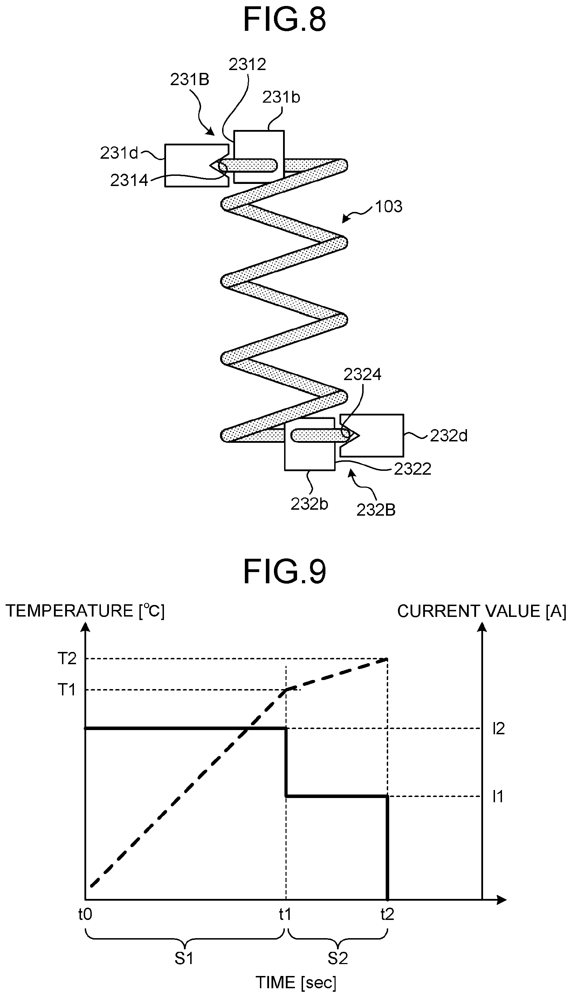

Next, a second modification of the second embodiment will be described with reference to FIG. 8. FIG. 8 is a diagram illustrating electrical heating according to the second modification. In the second modification, configurations of energizing members that perform electrical heating are different from those of the energizing members according to the embodiment. In the second modification, a configuration other than the configurations of the energizing members is similar to that of the embodiment, and the description thereof will not be repeated. Note that in FIG. 8, the same components as those in the embodiment are denoted by the same reference numerals.

As in the embodiment, movement (gripping of the shaped material 103) and energization of a first energizing member 231B and a second energizing member 232B according to the second modification are controlled, under the control of the control device 230.

The first energizing member 231B includes a first gripping member 231d and the second gripping member 231b, and is positioned on one end side of the shaped material 103.

The first gripping member 231d has a prismatic shape and is positioned on an outer peripheral side of the shaped material 103. The first gripping member 231d has a groove portion 2314 in which part of a surface on a side making contact with the shaped material 103 has a V-shaped groove. For a forming region (forming width and depth) of the groove portion 2314, a forming region is set where the first gripping member 231d does not make contact with the second gripping member 231b. Note that as long as the surface of the first gripping member 231d making contact with the shaped material 103 has a bent surface, the other portions may have a columnar shape or another polygonal shape.

In addition, the first gripping member 231d is movable in a direction towards or away from the second gripping member 231b, under the control of the control device 230.

The second energizing member 232B includes a first gripping member 232d and the second gripping member 232b, and is positioned on one end side of the shaped material 103.

The first gripping member 232d has a prismatic shape and is positioned on an outer peripheral side of the shaped material 103. The first gripping member 232d has a groove portion 2324 in which part of a surface on a side making contact with the shaped material 103 has a V-shaped groove. The forming region (forming width) of the groove portion 2324 is preferably larger than the diameter of the wire material of the shaped material 103.

In addition, the first gripping member 232d is movable in a direction towards or away from the second gripping member 232b, under the control of the control device 230.

The first energizing member 231B and the second energizing member 232B are controlled in energization via a power supply line which is not illustrated, under the control of the control device 230.

For example, the control device 230 is arranged at a predetermined position, on the shaped material 103, to move the gripping members of the first energizing member 231B and the second energizing member 232B so that one end portion and the other end portion of the shaped material 103 are gripped. Thereafter, the control device 230 applies a current to the first energizing member 231B and the second energizing member 232B via the power supply line. A current flows between the first energizing member 231B and the second energizing member 232B and the shaped material 103 through contact portions. The shaped material 103 is heated by heat generated at this time.

In the present second modification described above, as in the second embodiment, it is possible to reliably grip the shaped material 103 (coil spring 1) for electrical heating thereof, regardless of the shape. According to the present second modification, it is possible to suppress a decrease in productivity to fabricate coil springs having a plurality of types of shapes.

Furthermore, according to the present second modification, in the first gripping members 231d and 232d, the groove portions 2314 and 2324 are formed in the surfaces making contact with the shaped material 103, and grip the shaped material 103 on the bent surfaces, and therefore, the shaped material 103 can be gripped more reliably.

(Third Embodiment)

Next, a third embodiment of the present invention will be described with reference to FIG. 9. Note that a coil spring manufactured in the present third embodiment is the coil spring 1 illustrated in FIG. 1. Hereinafter, a coil spring manufacturing method according to the present third embodiment will be described. The coil spring manufacturing method according to the present third embodiment is similar to the manufacturing methods illustrated in FIGS. 2 and 3, and the description of the manufacturing procedure will not be repeated. Specifically, in the present third embodiment, a heating pattern during tempering or quenching is different from that of the second embodiment.

The electrical heating performed during electrical tempering (see (f) of FIG. 3) in the present third embodiment will be described with reference to FIG. 9. Note that also when the shaped material 102 before quenching is subjected to electrical heating (see (d) of FIG. 3), heating is allowed to be performed similarly.

FIG. 9 is a graph illustrating temporal changes of a current value and the temperature of the shaped material 103 during electrical heating. In FIG. 9, a solid line indicates the current value, and a broken line indicates the temperature of the shaped material 103. Therefore, the gradient of the broken line indicates a rate of temperature rise in the shaped material 103.

For example, the control device 230 changes the current value in two steps as illustrated in FIG. 9 to increase the temperature of the shaped material 103. At this time, as a control period of the control device 230, a first energization period S1 and a second energization period S2 are roughly set. In the first energization period S1, energization is performed with a current value I2 until a predetermined time elapses from the start of energization, and in the second energization period S2, energization is performed with a current value I1 smaller than that of the first energization period. In FIG. 9, a period from the start of energization (t0) to time t1 is defined as the first energization period, and a period from time t1 to time t2 is defined as the second energization period. In this electrical heating, the second energization period has a rate of temperature rise smaller than the rate of temperature rise during the first energization period, and the temperature of the shaped material 103 rises relatively slowly.

The control device 230 applies a large current during the first energization period to quickly raise the temperature to a heating (e.g., a temperature 50°C lower than a heating end temperature) that is a preset temperature T1, and gradually raises the temperature to a heating end temperature T2 with a small current (e.g., a current value 1 kA lower than the current value during the first energization period) during the second energization period, stabilizing the temperature at the end of heating. In FIG. 9, a ratio of a heating time between the first energization period and the second energization period is approximately 2:1. Note that the current value to be set and the heating time in each period are determined on the basis of a material diameter and a target heating time.

Here, a current value I(A) can be set on the basis of a calculation formula indicated by the following Formula (1). For example, a value obtained by Formula (1) or a value based on the value obtained by Formula (1) is determined as the current value.

$$I = S\sqrt{\frac{\alpha \Delta T}{t}} \qquad\qquad \cdots(1)$$

S: cross-sectional area of the shaped material 103 ($mm^2$), $\Delta T$: temperature difference (°C), t: heating time (sec), $\alpha$: constant

The temperature difference $\Delta T$ represents a difference between the temperature of the shaped material 103 before the start of heating and the temperature T1 or a difference between the temperature T1 and the temperature T2, and changes according to each period (the first energization period S1 or the second energization period S2). Specifically, the temperature difference $\Delta T$ in the first energization period S1 is a difference between the temperature of the shaped material 103 before the start of heating and the temperature T1, and the temperature difference $\Delta T$ in the second energization period S2 is a difference between the temperature T1 and the temperature T2.

For example, the control device 230 is arranged at a predetermined position, on the shaped material 103, to move the gripping members of the first energizing member 231 and the second energizing member 232 so that one end portion and the other end portion of the shaped material 103 are gripped. Thereafter, the control device 230 applies a current to the first energizing member 231 or the second energizing member 232 via the power supply line. A current flows between the first energizing member 231 and the second energizing member 232 and the shaped material 103 through contact portions. The shaped material 103 is heated by heat generated at this time.

The base material 100 is processed in the above process, and the coil spring 1 illustrated in FIG. 1 is fabricated.

Here, annealing treatment may be performed before and after the wire drawing. Furthermore, when the base material has a designed wire diameter, cold forming is allowed to be performed on the base material 100 without performing the wire drawing.

In the third embodiment of the present invention described above, tempering treatment that adjusts the hardness or the like is performed by electrical heating, as in the first embodiment, and therefore, the tempering treatment by the electrical heating enables suppression of variation in quality. In addition, the yield can be improved in manufacturing the coil spring 1.

Incidentally, when it is intended to heat the workpiece in a short time during heat treatment by the conventional energization, the amount of power input to the workpiece increases, and the temperature of the workpiece may continue to rise even if the energization is stopped at the timing at which the workpiece reaches the target temperature. In this case, heating temperature varies between workpieces, and the coil springs to be fabricated may also vary in quality. In contrast, in the present third embodiment, when heat treatment (here, at least electrical tempering) is performed, the current value is changed in two steps to control the temperature of the shaped material 103 approaching the heating end temperature to reduce the rate of temperature rise. Reduction of temperature rise before the end of heating suppresses the temperature rise in the shaped material 103 obtained after the heating is stopped. According to the present third embodiment, it is possible to reduce the variation in quality between the coil springs.

In addition, according to the present third embodiment, electrical tempering enables to reduce a time required for tempering and reduce the amount of carbon dioxide emissions, as compared with tempering using a furnace.

Note that temperature control during electrical heating is not limited to current value control in two steps as in the third embodiment described above. For example, FIG. 9 illustrates an example of a maximum value at the timing of starting the energization, but the current value may be set to gradually increase from the start of the energization. In addition, the current value may be gradually reduced upon current switching between the first energization period and the second energization period. The raising of temperature at this time is set according to a takt time for heat treatment.

The heating temperature may be adjusted by controlling on/off of current. For example, the second energization period has a shorter on period or a longer off period, than in the first energization period. Note that for controlling on/off of current, for example, a control method disclosed in JP 6077790 B2 can be adopted.

Note that also in the present third embodiment, the configurations of the energizing members of the first and second modifications of the second embodiment can be adopted.

Although the embodiments for carrying out the present invention have been described above, the present invention should not be limited only to the embodiments described above.

In this way, the present invention may include various embodiments and the like not described herein, and various design changes and the like within the scope of the technical ideas specified by the scope of the claims may be made.

Industrial Applicability

As described above, the coil spring manufacturing method according to the present invention suitably suppresses variation in quality.

Reference Signs List

1 COIL SPRING
100 BASE MATERIAL
101 DRAWN WIRE MATERIAL
102, 103 SHAPED MATERIAL
200 COILING MACHINE
210, 230 CONTROL DEVICE
211, 231 FIRST ENERGIZING MEMBER
212, 232 SECOND ENERGIZING MEMBER
221 TANK
222 WATER-SOLUBLE QUENCHING AGENT
231a, 231c, 231d, 232a, 232c, 232d FIRST GRIPPING MEMBER
231b, 232b SECOND GRIPPING MEMBER
2311, 2321 FLAT PORTION
2312, 2322 SIDE SURFACE
2313, 2323 CURVED SURFACE
2314, 2324 GROOVE PORTION

**Claims**

1.  A method of manufacturing a coil spring formed by processing a base material made of a wire material, the method comprising:

    a cold forming step of performing cold forming on the base material to fabricate a shaped material of spiral shape;
    a quenching step of performing quenching on the shaped material; and
    an electrical tempering step of performing tempering on the shaped material obtained after quenching, by using electrical heating.

2. The method of manufacturing a coil spring according to claim 1, further comprising

a drawn wire material forming step of performing wire drawing on the base material to form a drawn wire material, wherein the cold forming step includes performing cold forming on the drawn wire material.

3. The method of manufacturing a coil spring according to claim 1 or 2, wherein
in the quenching step, the shaped material is immersed in a heated water-soluble quenching agent to perform quenching.

4. The method of manufacturing a coil spring according to claim 2, further comprising
an electrical heating step of performing electrical heating on the drawn wire material, before the quenching step.

5. The method of manufacturing a coil spring according to claim 1, wherein

in the electrical tempering step,
the shaped material having both ends gripped by a first energizing member to grip one end of the shaped material obtained after the quenching and by a second energizing member to grip the other end of the shaped material obtained after the quenching is energized, and
the first and second energizing members grip the shaped material by a first gripping member and a second gripping member, the first gripping member being positioned on an outer peripheral side of the shaped material, the second gripping member being positioned on an inner peripheral side of the shaped material to hold the shaped material with the first gripping member, the second gripping member having a surface making contact with the shaped material having a radius of curvature that is smaller than a radius of curvature of the inner periphery of the shaped material, holding the shaped material with the first gripping member.

6. The method of manufacturing a coil spring according to claim 5, wherein

the first gripping member includes a flat portion provided on a surface making contact with the shaped material and has a flat shape, and
in the electrical tempering step, the flat portion of the first gripping member and an outer peripheral curved surface of the second gripping member grip the shaped material to electrically heat the shaped material.

7. The method of manufacturing a coil spring according to claim 5, wherein

the first gripping member is provided in a surface making contact with the shaped material, and has a curved surface curved in a concave shape, and having a radius of curvature larger than a diameter of the wire material of the shaped material, and
in the electrical tempering step, the curved surface of the first gripping member and an outer peripheral curved surface of the second gripping member grip the shaped material to electrically heat the shaped material.

8. The method of manufacturing a coil spring according to claim 5, wherein

the first gripping member includes a groove portion that is provided in a surface making contact with the shaped material and has a V-shaped groove, and
in the electrical tempering step, the groove portion of the first gripping member and an outer peripheral curved surface of the second gripping member grip the shaped material to electrically heat the shaped material.

9. The method of manufacturing a coil spring according to claim 5, wherein
in the electrical tempering step, a rate of temperature rise is changed stepwise to heat the shaped material.

10. The method of manufacturing a coil spring according to claim 5, further comprising
an electrical heating step of performing electrical heating on the shaped material obtained after the cold forming, before the quenching step.

11. The method of manufacturing a coil spring according to claim 1, wherein

in the electrical tempering step,
a first energization period extending for a predetermined time from start of heating of the shaped material and a second energization period extending after a lapse of the predetermined time to end of heating are set, and a rate of temperature rise in the shaped material in the second energization period is lower than a rate of temperature rise in the shaped material in the first energization period.

12. The method of manufacturing a coil spring according to claim 11, wherein
in the electrical tempering step, a current value during the second energization period is reduced relative to a current value during the first energization period.

13. The method of manufacturing a coil spring according to claim 11, wherein

in the electrical tempering step,
the shaped material having both ends gripped by a first energizing member to grip one end of the shaped material obtained after the quenching and by a second energizing member to grip the other end of the shaped material obtained after the quenching is energized, and
the first and second energizing members grip the shaped material by a first gripping member and a second gripping member, the first gripping member being positioned on an outer peripheral side of the shaped material, the second gripping member being positioned on an inner peripheral side of the shaped material to hold the shaped material with the first gripping member, the second gripping member having a surface making contact with the shaped material having a radius of curvature that is smaller than a radius of curvature of the inner periphery of the shaped material, holding the shaped material with the first gripping member.

14. The method of manufacturing a coil spring according to claim 11, further comprising
an electrical heating step of performing electrical heating on the shaped material obtained after the cold forming, before the quenching step.

# FIG.1

# FIG.2

(a)                    (b)                    (c)

(d)    212             (e)                    (f)    232

FIG.3

# FIG.4

# FIG.5

# FIG.6

# FIG.7

# FIG.8

# FIG.9

## INTERNATIONAL SEARCH REPORT

| International application No. |
| --- |
| **PCT/JP2022/043557** |

| **A.** | **CLASSIFICATION OF SUBJECT MATTER** |
| --- | --- |

*B21F 35/00*(2006.01)i; *C21D 9/02*(2006.01)i; *C21D 1/09*(2006.01)i; *C21D 1/40*(2006.01)i; *F16F 1/02*(2006.01)i
FI:    F16F1/02 B; B21F35/00 A; C21D1/09 U; C21D1/40 Z; C21D9/02 A

According to International Patent Classification (IPC) or to both national classification and IPC

| **B.** | **FIELDS SEARCHED** |
| --- | --- |

Minimum documentation searched (classification system followed by classification symbols)

B21F35/00; C21D9/02; C21D1/09; C21D1/40; F16F1/02

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| **C.** | **DOCUMENTS CONSIDERED TO BE RELEVANT** |
| --- | --- |

| Category* | Citation of document, with indication, where appropriate, of the relevant passages | Relevant to claim No. |
| --- | --- | --- |
| Y | JP 57-11741 A (KOSHUHA NETSUREN KK) 21 January 1982 (1982-01-21) p. 2, upper right column, line 7 to lower right column, line 16 | 1-4 |
| A | | 5-14 |
| Y | WO 2020/026716 A1 (CHUO SPRING CO LTD) 06 February 2020 (2020-02-06) paragraphs [0037]-[0040], [0097], fig. 2 | 1-4 |
| A | | 5-14 |
| A | JP 31-2152 B1 (KOSHUHA NETSUREN KK) 26 March 1956 (1956-03-26) p. 1, left column, line 22 to p. 2, right column, line 1, fig. 1-2 | 1-14 |
| A | JP 58-213825 A (NHK SPRING CO LTD) 12 December 1983 (1983-12-12) p. 2, lower left column, line 11 to p. 4, upper left column, line 3, fig. 1-3 | 1-14 |
| A | JP 59-38329 A (NHK SPRING CO LTD) 02 March 1984 (1984-03-02) p. 2, upper left column, line 14 to lower left column, line 16, fig. 3-5 | 1-14 |
| A | JP 61-30246 A (OKUNO, Toshikazu) 12 February 1986 (1986-02-12) p. 2, upper left column, line 20 to p. 3, lower right column, line 4, fig. 1-6 | 1-14 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **10 January 2023** | **24 January 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**EP 4 599 958 A1**

**INTERNATIONAL SEARCH REPORT**

International application No.

**PCT/JP2022/043557**

### C. DOCUMENTS CONSIDERED TO BE RELEVANT

| Category* | Citation of document, with indication, where appropriate, of the relevant passages | Relevant to claim No. |
|---|---|---|
| A | JP 8-134545 A (KOSHUHA NETSUREN KK) 28 May 1996 (1996-05-28) paragraphs [0005]-[0030], fig. 1-5 | 1-14 |
| A | JP 2003-73737 A (KOSHUHA NETSUREN KK) 12 March 2003 (2003-03-12) paragraphs [0026]-[0037], fig. 1 | 1-14 |
| A | JP 2011-195919 A (CHUO SPRING CO LTD) 06 October 2011 (2011-10-06) paragraphs [0021]-[0028], fig. 3-4 | 1-14 |
| A | JP 2011-195921 A (NHK SPRING CO LTD) 06 October 2011 (2011-10-06) paragraphs [0019]-[0026], fig. 1-2 | 1-14 |
| A | JP 2016-191445 A (NHK SPRING CO LTD) 10 November 2016 (2016-11-10) paragraph [0045], fig. 6 | 1-14 |
| A | WO 2013/099821 A1 (CHUO SPRING CO LTD) 04 July 2013 (2013-07-04) paragraphs [0022]-[0058], fig. 1-5 | 1-14 |
| A | US 6235131 B1 (MATHEW WARREN INDUSTRIES, INC.) 22 May 2001 (2001-05-22) column 3, line 3 to column 4, line 55, fig. 1-2 | 1-14 |
| A | US 2011/0031666 A1 (WARNER, Jerry G.) 10 February 2011 (2011-02-10) paragraphs [0029]-[0044], fig. 2-10 | 1-14 |

Form PCT/ISA/210 (second sheet) (January 2015)

**INTERNATIONAL SEARCH REPORT**
Information on patent family members

International application No.

**PCT/JP2022/043557**

| Patent document cited in search report | | | Publication date (day/month/year) | Patent family member(s) | | | Publication date (day/month/year) |
|---|---|---|---|---|---|---|---|
| JP | 57-11741 | A | 21 January 1982 | (Family: none) | | | |
| WO | 2020/026716 | A1 | 06 February 2020 | JP | 2020-20027 | A | |
| JP | 31-2152 | B1 | 26 March 1956 | (Family: none) | | | |
| JP | 58-213825 | A | 12 December 1983 | (Family: none) | | | |
| JP | 59-38329 | A | 02 March 1984 | (Family: none) | | | |
| JP | 61-30246 | A | 12 February 1986 | (Family: none) | | | |
| JP | 8-134545 | A | 28 May 1996 | (Family: none) | | | |
| JP | 2003-73737 | A | 12 March 2003 | (Family: none) | | | |
| JP | 2011-195919 | A | 06 October 2011 | US 2013/0092675 A1 paragraphs [0025]-[0032], fig. 3-4 WO 2011/118452 A1 EP 2551360 A1 CA 2793708 A1 CN 102834530 A KR 10-2013-0050293 A | | | |
| JP | 2011-195921 | A | 06 October 2011 | US 2011/0232810 A1 paragraphs [0023]-[0030], fig. 1-2 CN 102199692 A | | | |
| JP | 2016-191445 | A | 10 November 2016 | US 2018/0298972 A1 paragraph [0097], fig. 6A-6B WO 2016/158405 A1 EP 3279495 A1 CA 2981220 A1 KR 10-2017-0121292 A CN 107532669 A | | | |
| WO | 2013/099821 | A1 | 04 July 2013 | CN 104011232 A | | | |
| US | 6235131 | B1 | 22 May 2001 | (Family: none) | | | |
| US | 2011/0031666 | A1 | 10 February 2011 | CA 2712179 A1 | | | |

Form PCT/ISA/210 (patent family annex) (January 2015)

**REFERENCES CITED IN THE DESCRIPTION**

**Patent documents cited in the description**

- JP S63059775 B
- JP 5574772 B

- JP 6077790 B